# EUROPEAN PATENT SPECIFICATION

(11) **EP 1 895 717 B1**
(45) Date of publication and mention of the grant of the patent: **30.06.2010**
(21) Application number: 06017920.7
(22) Date of filing: 28.08.2006
(51) Int. Cl.: H04L 12/40, G06F 13/40, G06F 13/38

(54) **Method and arrangement for transmitting different data streams over a hardware interface bus**
Verfahren und Vorrichtung zur Übertragung von verschiedenen Datenströmen auf eine Hardwarebusschnittstelle
Méthode et arrangement pour transmettre différents flux de données sur une interface bus hardware

(43) Date of publication of application: 05.03.2008
(73) Proprietor: Continental Automotive GmbH, 30165 Hannover (DE)
(72) Inventor: Bollars, Stefan, 5708 WB Helmond (NL); Schlösser, Theodoor Antoon Jozef, 5655 JW Eindhoven (NL)

(56) References cited:
- WO-A2-2007/125044
- US-A1- 2004 230 711
- US-B1- 6 757 777

## Description

There are numerous applications of information processing systems where different data streams have to be transmitted over a common hardware interface. Increasing the number of hardware interface usually causes additional costs and tends to increase system complexity and consequently hardware and software effort. The system engineer therefore usually tries to keep the number of hardware interfaces as small as possible.

One such situation occurs e.g. in the design of automotive electronic systems, especially of infotainment systems in cars like e.g. a car audio system that seeks to integrate audio streaming via a Bluetooth (i.e. a short-distance radio data transmission via 2.4 GHz ISM band) interface. In such a situation, the car audio system - also occasionally called "host" in the following - has to be extended by a wireless connection module (e.g. a Bluetooth connection module) - also occasionally called "slave" in the following - so that an audio data stream can be imported to the host via the air interface of the employed wireless technology.

The host shall control the whole audio application and usually is equipped with only a limited number of hardware interfaces that could be used to connect to the slave. Since the host frequently has to be connected to many other devices like mobile phones, loudspeakers, navigations systems, etc., it will frequently be advantageous to share a hardware interface with other applications for the purpose of audio streaming. Then several different data streams have to be transmitted via this common hardware interface, which is therefore also referred to as a hardware interface bus in the following. But even if a dedicated hardware interface is available for the audio streaming application, at least two data streams have to be transmitted over the hardware interface bus, namely the audio data and the control commands used by the host and the possibly slave to control the audio streaming application.

US 6,757,777 B1 discloses a switching unit which is operable to interconnect one bus master from a group of bus masters on a bus system. The bus switch operates on itself and requires no special signals to switch the bus master on the bus system.

US 2004/0230711 A1 discloses an apparatus to connect a computer and a plurality of devices for data exchange. The connection is established by a second serial communication port, whereas a first serial communication port controls a changeover switch to connect one device of the plurality of devices with the second serial communication port.

WO 2007/125044 A2 discloses a method for transmitting two different data streams over a hardware interface bus between a first and a second transceiver, wherein the second transceiver comprises two different communication units and a data switch connecting the hardware interface bus with the communication units. The data switch is controlled by a processor.

The problem addressed by the present invention is to propose a method and arrangement for transmitting different data streams over a hardware interface bus. This problem is solved by a method or arrangement according to one of the independent claims. Preferred embodiments of the invention are subject to dependent claims.

In the following, the invention will be described in detail by help of preferred embodiments and schematic figures.
Fig 1 shows a schematic representation of a first preferred embodiment of an arrangement according to the present invention.
Fig 2 shows a schematic representation of a first preferred embodiment of a method according to the present invention.
Fig 3 shows a schematic representation of a second preferred embodiment of an arrangement according to the present invention.
Fig 4 shows a schematic representation of a second preferred embodiment of a method according to the present invention.

According to the present invention, for transmitting at least two different data streams (ds1, ds2) over a hardware interface bus (HIB) between a first transceiver (T1) and a second transceiver (T2), a method and an arrangement are provided in which the second transceiver (T2) comprises at least two different data processing units (DPU1, DPU2) and at least one data switch (DS) connecting the hardware interface bus with the different data processing units. The data switch is controlled by control signals (cs1, cs2) which are generated by the data processing units or by controllers (C1, C2) affiliated with their respective data processing units.

To prevent this description from becoming too abstract, parts of it will be given in form of an important example, in which the first transceiver (T1) is a wireless connection module acquiring audio data (ds2) from an audio source via a wireless interface (WI) to transmit these audio data (ds2) over the hardware interface bus (HIB) to a digital signal processing unit (DPU2). This digital signal processing unit (DPU2) is part of a car audio system (T2) further comprising a host processing unit (DPU1) and possibly a host controller (C1), a controller (C2) affiliated to the signal processing unit (DPU2) and a data switch (DS). The data switch (DS) is controlled by these controllers (C1, C2). In this arrangement the host processing unit (DPU1) and/or its affiliated host controller (C1) control the transmission of the raw data from the wireless connection module to the digital signal processing unit (DPU2). The invention is, however, more general than this specific example, which is only used to keep the description comprehensible.

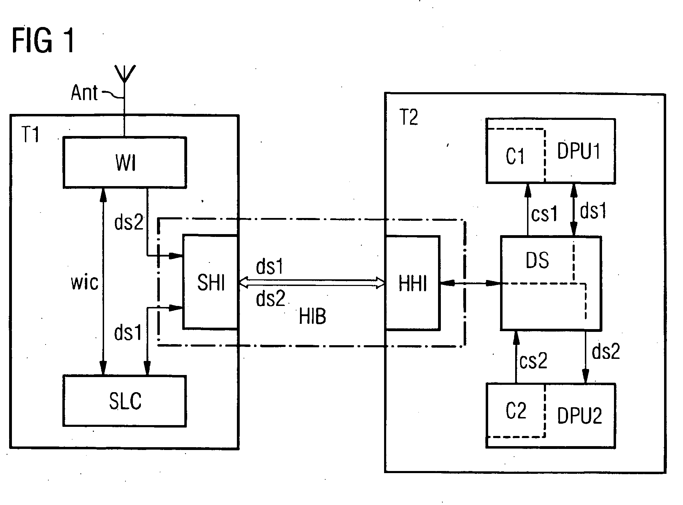

As shown rather schematically in figure 1, two transceivers (T1) and (T2) are able to exchange data via a hardware interface bus (HIB). To this end, transceiver (T1) comprises a slave controller (SLC), a slave hardware interface module (SHI) and a wireless interface module (WI). For the invention it is not important, however, that WI is actually a wireless interface module; it could also be any kind of communication interface module, connecting the slave (T1) to any kind of communication channel. In the applications envisaged primarily, this communication channel is, however, assumed to be wireless.

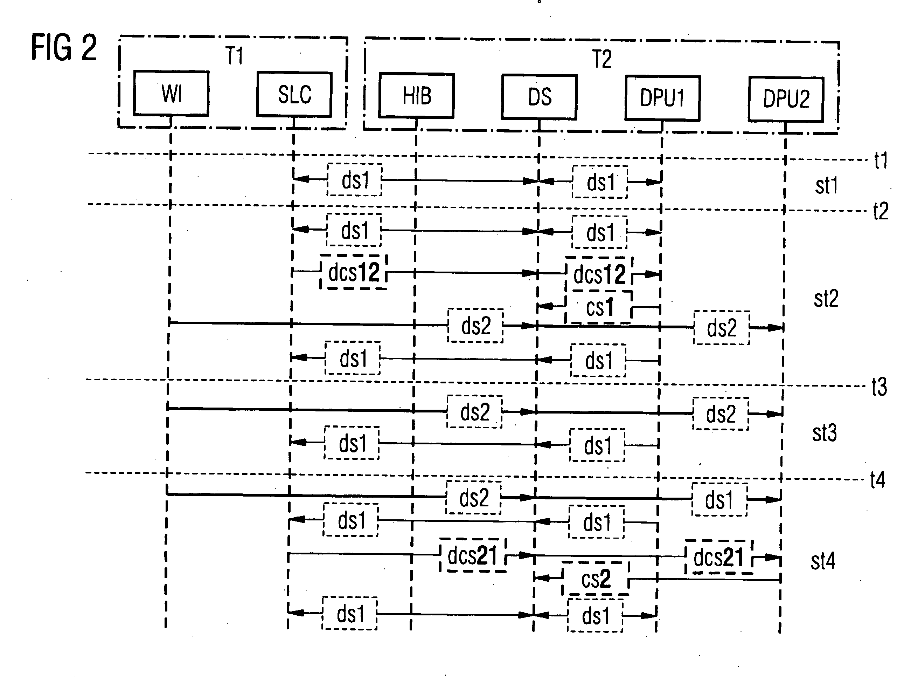

Therefore in this example, the wireless interface module (WI) is connected to an antenna (Ant), so that it can receive data signals over the wireless communication channel. These data signals have to be transmitted as a data stream (ds2) to the data processing unit (DPU2) via the hardware interface bus (HIB), as soon as the host data processing unit (DPU1) of the host (T2) determines the slave (T1) to do this. The process of data transmission according to the present invention will be described later by help of figure 2.

The slave controller (SLC) can control - see figure 1 - the wireless interface module (WI), e.g. by help of special wireless interface control signals (wic), which may be interchanged locally between the wireless interface module (WI) and the slave controller (SLC) without involving the hardware interface bus (HIB). In this way, the slave controller may, upon reception of certain control signals (ds1) from the host (T2) via the hardware interface bus (HIB), cause the wireless interface module (WI) to feed the received data (ds2) into the slave hardware interface (SHI), which forms a part of the hardware interface bus (HIB) on the side of the slave.

On the host side, i.e. on the side of the second transceiver (T2), the hardware interface bus (HIB) is complemented by a host hardware interface (HHI). Both parts of the hardware interface bus (HIB), the slave hardware interface (SHI) and the host hardware interface (HHI), may be thought of as e.g. serial interface modules, e.g. so called UART devices, sometimes simply referred to as UARTs, together constitute the hardware components of the hardware interface bus. For the skilled reader it is, however, obvious that serial interface modules are not the only possible ways to implement a hardware interface bus as required to work the present invention. Instead, any kind of interface technology is able to transmit data between the two transceivers (T1, T2) with sufficient speed and reliability, depending on the needs of the concrete application.

The data received by the host hardware interface (HHI) are - as can be seen also from figure 1 - forwarded to the data switch (DS). This data switch (DS) is controlled by control signals (CS1, CS2) which are generated by the data processing units or by controllers (C1, C2) affiliated with their respective data processing units. Preferably, this is done by help of controllers (C1, C2) which monitor the data sequence they receive to detect the occurrence of anyone of at least two possible dedicated command signals (dcs12, dcs21). On the actual occurrence of such a command signal - the respective controller generates a respective control signal (cs1, cs2), to cause the data switch (DS) to transmit all data following the detected command signal in the data sequence received by the switch to the data processing unit associated with the detected command signal, until the switch will receive a further control signal. More precisely, if the first data processing unit (DPU1) or its affiliated controller (C1) monitors the first data stream (ds1) and detects the occurrence of the dedicated command signal dcs12, this first data processing unit (DPU1) or its affiliated controller (C1) generates the control signal cs1 which causes the data switch (DS) to transmit all data following the detected command signal in the data sequence received by the switch (DS) to the second data processing unit (DPU2). This will last until the data switch (DS) receives a further control signal, namely the control signal cs2 from the second data processing unit (DPU2) or its affiliated controller (C2). On this event, the switch will transmit all data following the detected command signal in the data sequence received by the switch (DS) to the first data processing unit (DPU1).

In this way, according to the invention, each data stream (ds1, ds2) will be transmitted to its corresponding data processing unit (DPU1, DPU2) automatically.

According to a preferred embodiment of the present invention, at least one of the data processing units (DPU1, DPU2) or their affiliated controllers (C1, C2) may send at least one command (STOP) to the first transceiver (T1) to cause it to terminate the transmission of at least one of the different data streams (DS1, DS2) over the hardware interface bus.

In our preferred example application of car audio systems, this function will be exercised by the host data processing unit (DPU1), because this unit has to control the overall function of the system. In this example, the second data processing unit (DPU2) is a digital signal processor which processes the audio data stream ds2.

With reference to figure 2 the process of switching between the two data processing units may be explained more clearly. This figure is basically some kind of sequence chart diagram visualizing the most important aspects of the transmission process.

At time t1 the system is assumed to be initialized. After initialization, the system is in a state referred to as st1 in figure 2. In this state the first data processing unit (DPU1) of T2 and the slave controller (SLC) of T1 communicate via the hardware interface bus (HIB). This communication is referred to as data stream ds1 in figure 2 and may be regarded in general as a bidirectional communication of DPU1 and SLC. In our example application of the car audio system, the host DPU1 exchanges AT-command messages with the slave controller SLC.

At time t2 the system is switched into state st2, a state in which the data stream ds2 shall be transmitted from the wireless interface module (WI) to the second data processing unit DPU2. In our example application, the data stream ds2 is a stream of audio data that shall be transmitted to the digital signal processor DPU2. This switching process of the system state occurs when the slave controller (SLC) sends a dedicated command signal dcs12 to the first data processing unit DPU1. The dedicated command signal dcs12 may be regarded as a part of the data stream ds1, which is addressed to DPU1 and therefore transmitted to DPU1 by the data switch DS. DPU1 monitors the data stream ds1 and on the occurrence of the dedicated command signal dcs12 the first data processing unit DPU1 generates the control signal cs1, or it causes its affiliated controller C1 to generate cs1. This control signal cs1 causes the data switch DS to transmit the following data to the second data processing unit DPU2. To enhance the efficiency of this state switching process and in order to avoid delays, the dedicated command signal dcs12 and / or the control signal cs1 may contain some information about the actual number of data symbols, bytes, etc. that shall be transmitted to DPU1 before the actual switching occurs.

Moreover, the dedicated command signal may - in a variant of this embodiment - equally well be generated by DPU1, because DPU1 is also taking part in the data communication over the hardware interface bus at time t2. Several similar variants of this embodiment may be chosen by the skilled reader of this description depending on the special needs of the application envisaged.

In state st3, the data stream ds2 is directed between WI and DPU2 whereas the data stream ds1 is directed between DPU1 and SLC. In our example application, the host T2 controls the total system behaviour by ds1, whereas the audio data are transmitted from the Bluetooth module (WI) to the signal processing unit DPU2.

At time t4 the state of audio streaming shall be terminated. To this end, the data switch DS must be caused to transmit the data stream ds1 to the first data processing unit DPU1. This can be done - as shown in figure 2 - by the slave controller (SLC) which sends a dedicated command signal dcs21 to the second data processing unit DPU2, which in turn generates or causes its affiliated controller C2 to generate a control signal cs2, which causes the data switch to send to data coming from SLC to DPU1.

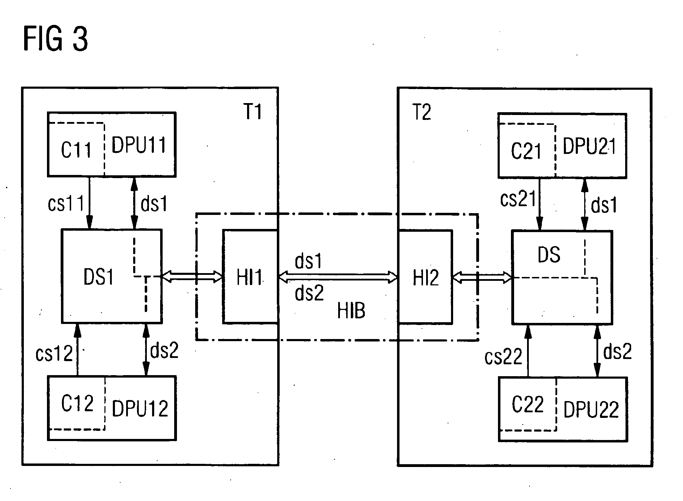

Figure 3 illustrates a further preferred embodiment of the present invention, where transceiver T1 is a subsystem very similar, in this case identical, to transceiver T2. Both subsystems T1 and T2 each comprise at least two data processing units (DPU11, DPU12, DPU21, DPU22), possibly each with an affiliated controller (C11, C12, C21, C22). Each subsystem further comprises a data switch (DS1, DS2). These data switches route the data streams ds1 and ds2, which are transmitted over the hardware interface bus (HIB), between said data processing units.

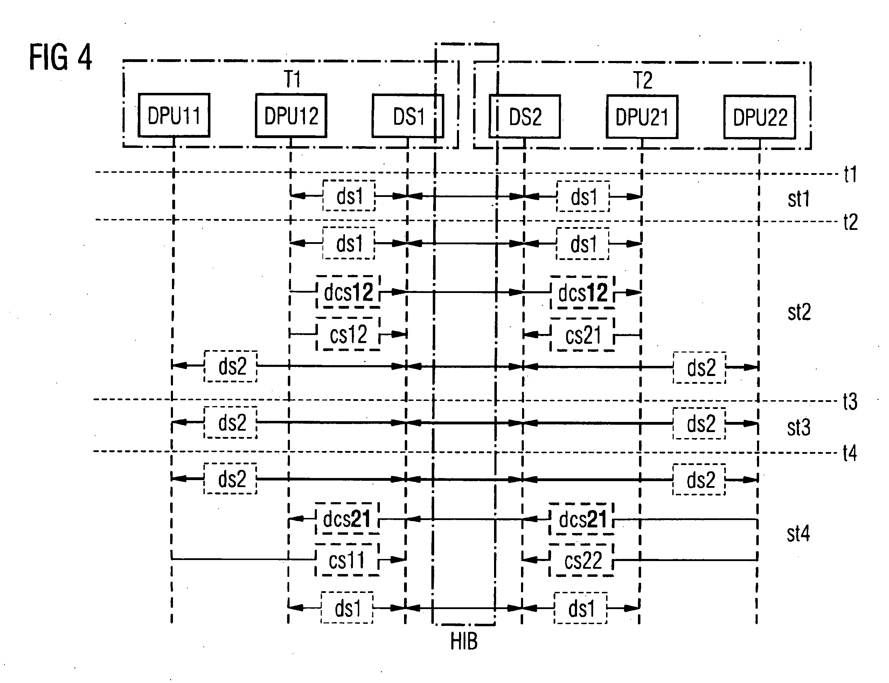

Figure 4 illustrates the process of controlling the data switches DS1 and DS2, so that the data streams are delivered to the designated receivers. In this respect, figure 4 only gives an example, because the data streams do not necessarily have to be transmitted in the way shown in this figure. Instead, the architecture of figure 3 admits far more general distributions of data among the existing senders and receivers, which can be easily deduced from this figure by the skilled reader.

In the embodiment illustrated in figure 4, the existence of two data switches - one in each transceiver - leads to considerable flexibility of data communication. Each of the data processing units (DPU11, ... , DPU22) may exchange data with every data processing unit on the opposite transceiver via the hardware interface bus. To achieve this, the data switches are controlled by control signals (c11, ... , c22) which are triggered by dedicated command signals (dcs12, dcs21) in a similar way as described in connection with figure 2. The analogy is so striking, that the skilled reader may easily deduce the details from figures 2 and 4.

The present invention handles the control of 2 different protocols or data streams (ds1, ds2) over one hardware interface bus, e.g. a UART, without having to much overhead on the hardware interface. Therefore, the invention allows the use of lower performance micro-processors, streaming fast "raw data", e.g. audio data like MP3 data, and command packets, like e.g. AT-CMD messages, at the same time over one hardware interface.

To control the two different data streams ("protocols") over one bus, two dedicated command signals have to be specified. Their usage allows the rerouting of the incoming data. These dedicated commands may e.g. be "CMD+RAWSTART" and "CMD+RAWSTOP" or the like in case of the car audio systems application referred to above. In this example application, the data switch (DS) of the host (T2) is responsible for which data processing unit (DPU1, DPU2) gets the data. The host controller (DPU1) checks on CMD+RAWSTART and indicates to the data switch (DS) to switch the data to the digital signal processor (DSP). This DSP (DPU2) checks on CMD+RAWSTOP and indicates this to the data switch (DS). If this happens, the data switch (DS) switches the data back to the host controller (DPU1), so that DPU1 can again receive the normal commands "CMD". In all cases the host controller can send back CMD to the slave controller and end the "raw data" data stream. Depending on the used system, also a DMA controller can be used to transfer the data to the wanted controller.

## Claims

1. A method for transmitting at least two different data streams (DS1, DS2) over a hardware interface bus (HIB) between a first transceiver (T1) and a second transceiver (T2), the second transceiver (T2) comprising at least two different data processing units (DPU1, DPU2) and at least one data switch (DS) connecting the hardware interface bus with the different data processing units, wherein the data switch is controlled by control signals (CS1, CS2) which are generated by the data processing units or by controllers (C1, C2) affiliated with their respective data processing units, **characterized in that** each one of the at least two different data processing units (DPU1, DPU2) or their respective controllers (C1, C2) monitors the data sequence it receives to detect the occurrence of anyone of at least two possible dedicated command signals (dcs12, dcs21) and, on the actual occurrence of such a command signal, generates a respective control signal, to cause the data switch (DS) to transmit all data following the detected command signal in the data sequence received by the switch to the data processing unit associated with the detected command signal, until the switch will receive a further control signal.

2. A method according to claim 1, **characterized in that** at least one of the data processing units (DPU1, DPU2) or their affiliated controllers (C1, C2) may send at least one command, STOP, to the first transceiver (T1) to cause it to terminate the transmission of at least one of the different data streams (DS1, DS2) over the hardware interface bus.

3. Arrangement of two transceivers (T1, T2) for transmitting at least two different data streams (DS1, DS2) over a hardware interface bus (HIB) between the first transceiver (T1) and the second transceiver (T2), the second transceiver (T2) comprising at least two different data processing units (DPU1, DPU2) and at least one data switch (DS) connecting the hardware interface bus with the different data processing units, wherein the data switch is adapted to be controlled by control signals (CS1, CS2) which are generated by the data processing units or by controllers (C1, C2) affiliated with their respective data processing units, **characterized in that** each one of the at least two different data processing units (DPU1, DPU2) or their respective controllers (C1, C2) are adapted to monitor the data sequence they receive to detect the occurrence of anyone of at least two possible dedicated command signals (dcs12, dcs21) and, on the actual occurrence of such a command signal, to generate a respective control signal, to cause the data switch (DS) to transmit all data following the detected command signal in the data sequence received by the switch to the data processing unit associated with the detected command signal, until the switch will receive a further control signal.

4. Arrangement according to claim 3, **characterized in that** at least one of the data processing units (DPU1, DPU2) or their affiliated controllers (C1, C2) are adapted to send at least one command, STOP, to the first transceiver (T1) to cause it to terminate the transmission of at least one of the different data streams (DS1, DS2) over the hardware interface bus.

5. Arrangement according to claim 4, **characterized in that** the first transceiver (T1) is a wireless connection module acquiring raw data (DS2) from an audio source, AS, via a wireless interface (WI) and is adapted to transmit these raw data (DS2) over the hardware interface bus (HIB) to a digital signal processing unit (DPU2) which is part of a car audio system (T2) further comprising a host processing unit (DPU1) and/or host controller (C1), a controller (C2) affiliated to the signal processing unit (DPU2) and a data switch (DS), which is adapted to be controlled by these controllers (C1, C2), in which arrangement the host processing unit (DPU1) and/or its affiliated host controller (C1) are adapted to control the transmission of the raw data from the wireless connection module to the digital signal processing unit (DPU2).

## Patentansprüche

1. Verfahren zum Übertragen von mindestens zwei verschiedenen Datenströmen (DS1, DS2) über einen Hardware-Schnittstellenbus (HIB) zwischen einem ersten Sender/Empfänger (T1) und einem zweiten Sender/Empfänger (T2), wobei der zweite Sender/Empfänger (T2) mindestens zwei verschiedene Datenverarbeitungseinheiten (DPU1, DPU2) und mindestens einen den Hardware-Schnittstellenbus mit den verschiedenen Datenverarbeitungseinheiten verbindenden Datenschalter (DS) umfasst, wobei der Datenschalter durch Steuersignale (CS1, CS2) gesteuert werden, die durch die Datenverarbeitungseinheiten oder durch Steuerungen (C1, C2), die mit ihren jeweiligen Datenverarbeitungseinheiten affiliiert sind, erzeugt werden, **dadurch gekennzeichnet, dass** jede einzelne der mindestens zwei verschiedenen Datenverarbeitungseinheiten (DPU1, DPU2) oder ihrer jeweiligen Steuerungen (C1, C2) die Datensequenz, die sie empfängt, überwacht, um das Auftreten beliebiger von mindestens zwei möglichen dedizierten Befehlssignalen (dcs12, dcs21) zu detektieren, und beim tatsächlichen Auftreten eines solchen Befehlssignals ein jeweiliges Steuersignal erzeugt, um zu bewirken, dass der Datenschalter (DS) alle dem detektierten Befehlssignal folgenden Daten in der durch den Schalter empfangenen Datensequenz zu der mit dem detektierten Befehlssignal assoziierten Datenverarbeitungseinheit sendet, bis der Schalter ein weiteres Steuersignal empfängt.

2. Verfahren nach Anspruch 1, **dadurch gekennzeichnet, dass** mindestens eine der Datenverarbeitungseinheiten (DPU1, DPU2) oder ihrer affiliierten Steuerungen (C1, C2) mindestens einen Befehl STOP zu dem ersten Sender/Empfänger (T1) senden kann, um zu bewirken, dass er die Übertragung mindestens eines der verschiedenen Datenströme (DS1, DS2) über den Hardware-Schnittstellenbus beendet.

3. Anordnung von zwei Sendern/Empfängern (T1, T2) zum Übertragen von mindestens zwei verschiedenen Datenströmen (DS1, DS2) über einen Hardware-Schnittstellenbus (HIB) zwischen dem ersten Sender/Empfänger (T1) und dem zweiten Sender/Empfänger (T2), wobei der zweite Sender/Empfänger (T2) mindestens zwei verschiedene Datenverarbeitungseinheiten (DPU1, DPU2) und mindestens einen den Hardware-Schnittstellenbus mit den verschiedenen Datenverarbeitungseinheiten verbindenden Datenschalter (DS) umfasst, wobei der Datenschalter dafür ausgelegt ist, durch Steuersignale (CS1, CS2) gesteuert zu werden, die durch die Datenverarbeitungseinheiten oder durch mit ihren jeweiligen Datenverarbeitungseinheiten affiliierte Steuerungen (C1, C2) erzeugt werden, **dadurch gekennzeichnet, dass** jede einzelne der mindestens zwei verschiedenen Datenverarbeitungseinheiten (DPU1, DPU2) oder ihrer jeweiligen Steuerungen (C1, C2) dafür ausgelegt sind, die Datensequenz, die sie empfangen, zu überwachen, um das Auftreten beliebiger von mindestens zwei möglichen dedizierten Befehlssignalen (dcs12, dcs21) zu detektieren, und beim tatsächlichen Auftreten eines solchen Befehlssignals ein jeweiliges Steuersignal zu erzeugen, um zu bewirken, dass der Datenschalter (DS) alle dem detektierten Befehlssignal folgenden Daten in der durch den Schalter empfangenen Datensequenz zu der mit dem detektierten Befehlssignal assoziierten Datenverarbeitungseinheit sendet, bis der Schalter ein weiteres Steuersignal empfängt.

4. Anordnung nach Anspruch 3, **dadurch gekennzeichnet, dass** mindestens eine der Datenverarbeitungseinheiten (DPU1, DPU2) oder ihrer affiliierten Steuerungen (C1, C2) mindestens einen Befehl STOP zu dem ersten Sender/Empfänger (T1) senden kann, um zu bewirken, dass er die Übertragung mindestens eines der verschiedenen Datenströme (DS1, DS2) über den Hardware-Schnittstellenbus beendet.

5. Anordnung nach Anspruch 4, **dadurch gekennzeichnet, dass** der erste Sender/Empfänger (T1) ein drahtloses Verbindungsmodul ist, das Rohdaten (DS2) aus einer Audioquelle AS über eine drahtlose Schnittstelle (WI) beschafft und dafür ausgelegt ist, diese Rohdaten (DS2) über den Hardware-Schnittstellenbus (HIB) zu einer digitalen Signalverarbeitungseinheit (DPU2) zu senden, die Teil eines Auto-Audiosystems (T2) ist, ferner umfassend eine Hostverarbeitungseinheit (DPU1) und/oder HostSteuerung (C1), eine mit der Signalverarbeitungseinheit (DPU2) affiliierte Steuerung (C2) und einen Datenschalter (DS), der dafür ausgelegt ist, durch diese Steuerungen (C1, C2) gesteuert zu werden, wobei in dieser Anordnung die Host-Verarbeitungseinheit (DPU1) und/oder ihre affiliierte Hoststeuerung (C1) dafür ausgelegt sind, die Übertragung der Rohdaten von dem drahtlosen Verbindungsmodul zu der digitalen Signalverarbeitungseinheit (DPU2) zu steuern.

## Revendications

1. Procédé de transmission d'au moins deux flux de données différents (DS1, DS2) sur un bus d'interface matériel (HIB) entre un premier émetteur-récepteur (T1) et un deuxième émetteur-récepteur (T2), le deuxième émetteur-récepteur (T2) comprenant au moins deux unités de traitement de données différentes (DPU1, DPU2) et au moins un commutateur de données (DS) connectant le bus d'interface matériel avec les unités de traitement de données différentes, dans lequel le commutateur de données est commandé par des signaux de commande (CS1, CS2) qui sont générés par les unités de traitement de données ou par des contrôleurs (C1, C2) affiliés avec leurs unités de traitement de données respectives, **caractérisé en ce que** chacune des au moins deux unités de traitement de données différentes (DPU1, DPU2) ou chacun de leurs contrôleurs (C1, C2) respectifs surveille la séquence de données qu'elle (il) reçoit pour détecter l'occurrence de l'un quelconque d'au moins deux signaux de commande dédiés possibles (dcs12, dcs21) et, en cas d'occurrence effective d'un tel signal de commande, génère un signal de commande respectif, pour faire en sorte que le commutateur de données (DS) transmette toutes les données suivant le signal de commande détecté dans la séquence de données reçue par le commutateur à l'unité de traitement de données associée avec le signal de commande détecté, jusqu'à ce que le commutateur reçoive un autre signal de commande.

2. Procédé selon la revendication 1, **caractérisé en ce qu'**au moins l'une des unités de traitement de données (DPU1, DPU2), ou l'un de leurs contrôleurs (C1, C2) affiliés peut envoyer au moins une commande, STOP, au premier émetteur-récepteur (T1) pour faire en sorte qu'il interrompe la transmission d'au moins un des flux de données différents (DS1, DS2) sur le bus d'interface matériel.

3. Agencement de deux émetteurs-récepteurs (T1, T2) pour transmettre au moins deux flux de données différents (DS1, DS2) sur un bus d'interface matériel (HIB) entre le premier émetteur-récepteur (T1) et le deuxième émetteur-récepteur (T2), le deuxième émetteur-récepteur (T2) comprenant au moins deux unités de traitement de données différentes (DPU1, DPU2) et au moins un commutateur de données (DS) connectant le bus d'interface matériel avec les unités de traitement de données différentes, le commutateur de données étant adapté à être commandé par des signaux de commande (CS1, CS2) qui sont générés par les unités de traitement de données ou par des contrôleurs (C1, C2) affiliés avec leurs unités de traitement de données respectives, **caractérisé en ce que** chacune des au moins deux unités de traitement de données différentes (DPU1, DPU2) ou leurs contrôleurs (C1, C2) respectifs sont adapté(e)s à surveiller la séquence de données qu'elles (ils) reçoivent pour détecter l'occurrence de l'un quelconque d'au moins deux signaux de commande dédiés possibles (dcs12, dcs21) et, en cas d'occurrence effective d'un tel signal de commande, à générer un signal de commande respectif, pour faire en sorte que le commutateur de données (DS) transmette toutes les données suivant le signal de commande détecté dans la séquence de données reçue par le commutateur à l'unité de traitement de données associée avec le signal de commande détecté, jusqu'à ce que le commutateur reçoive un autre signal de commande.

4. Agencement selon la revendication 3, **caractérisé en ce qu'**au moins l'une des unités de traitement de données (DPU1, DPU2), ou l'un de leurs contrôleurs (C1, C2) affiliés est adapté(e) pour envoyer au moins une commande, STOP, au premier émetteur-récepteur (T1) pour faire en sorte qu'il interrompe la transmission d'au moins un des flux de données différents (DS1, DS2) sur le bus d'interface matériel.

5. Agencement selon la revendication 4, **caractérisé en ce que** le premier émetteur-récepteur (T1) est un module de connexion sans fil acquérant des données brutes (DS2) provenant d'une source audio, AS, par l'intermédiaire d'une interface sans fil (WI) et est adapté à transmettre ces données brutes (DS2) sur le bus d'interface matériel (HIB) à une unité de traitement de signaux numériques (DPU2) qui fait partie d'un système audio d'automobile (T2) comprenant en outre une unité de traitement hôte (DPU1) et/ou un contrôleur hôte (C1), un contrôleur (C2) affilié à l'unité de traitement de signaux (DPU2) et un commutateur de données (DS), qui est adapté à être commandé par ces contrôleurs (C1, C2), dans lequel agencement, l'unité de traitement hôte (DPU1) et/ou son contrôleur hôte affilié (C1) est (sont) adapté(s) à commander la transmission des données brutes du module de connexion sans fil jusqu'à l'unité de traitement de signaux numériques (DPU2).
